(19)

**Europäisches Patentamt**
**European Patent Office**
**Office européen des brevets**

(11) **EP 2 295 278 A2**

(12) **EUROPÄISCHE PATENTANMELDUNG**

(43) Veröffentlichungstag:
**16.03.2011 Patentblatt 2011/11**

(51) Int Cl.:
**B60L 5/00** (2006.01)     **B60L 5/18** (2006.01)

(21) Anmeldenummer: **10004469.2**

(22) Anmeldetag: **28.04.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **11.08.2009 DE 102009036963**

(71) Anmelder: **Deutsche Bahn AG**
**10785 Berlin (DE)**

(72) Erfinder:
• **Krötz, Werner**
**81371 München (DE)**
• **Landwehr, Bernhard**
**80639 München (DE)**

(74) Vertreter: **Zinken-Sommer, Rainer**
**Deutsche Bahn AG**
**Patentabteilung**
**Völckerstrasse 5**
**80939 München (DE)**

(54) **Verfahren und Vorrichtung zur Messung der Kontaktkräfte zwischen einem Stromabnehmer und einer Oberleitung unter Einfluss der aerodynamischen Kraftanteile**

(57)     Die Erfindung betrifft ein Verfahren und eine Vorrichtung zur Messung von aerodynamischen Kraftanteilen bei der Kontaktkraftmessung zwischen einem Stromabnehmer und einer Oberleitung.

Der Erfindung liegt die Aufgabe zugrunde, die Kontaktkraft des Stromabnehmers zur Oberleitung über den gesamten Arbeitsbereich korrekt zu messen.

Dies wird erfindungsgemäß nach Anspruch 1 dadurch erreicht,

dass Kontaktkräfte zwischen Stromabnehmer und Oberleitung direkt unter Einschluss der aerodynamischen Anteile erfasst werden. Abhängig vom weiteren Messablauf können alle Messungen entweder direkt mit diesem Verfahren durchgeführt werden oder aber der aerodynamische Kraftanteil durch einen Vergleich mit einer parallel durchgeführten zusätzlichen Messung der Schnittkräfte ermittelt werden. In letzterem Fall werden dann die weiteren Messungen mit herkömmlichen Messverfahren mit Sensoren zwischen Schleistück(en) und Wippe durchgeführt und mit den aerodynamischen Kraftanteilen korrigiert. Diese Korrekturwerte können zusätzlich in Abhängigkeit von der Position des Fahrzeuges auf der Strecke ermittelt werden und damit zur Korrektur von Einflüssen aus dem Streckenprofil und vorhandenen Bauwerken verwendet werden.

Die Vorrichtung ist **dadurch gekennzeichnet, dass** das Schleifstück vollständig oder teilweise an Stelle der Schleifleiste (Schleifkohle) als U-förmiges Hohlprofil ausgebildet ist, welches mit seinem Boden (9) auf dem Grundkörper (Schleifstückträger) befestigt und zwischen den beiden Schenkeln des Hohlprofils einen Schleifkontakt aufweist, wobei auf dem Boden des Hohlprofils ein innerer Sensor befestigt ist, der sich am Schleifkontakt abstützt.

Figur 1

EP 2 295 278 A2

**Beschreibung**

Die Erfindung betrifft ein Verfahren und eine Vorrichtung zur Messung von aerodynamischen Kraftanteilen bei der Kontaktkraftmessung zwischen einem Stromabnehmer und einer Oberleitung.

Stromabnehmer moderner Schienenfahrzeuge sind hinsichtlich der Kontaktkraft zwischen der Schleifleiste ihres Stromabnehmers und dem Fahrdraht so ausgeführt, dass unabhängig von den Relativbewegungen zwischen Schienenfahrzeug und Fahrdraht, von Wind und Fahrzeuggeschwindigkeit vom Schwingungsverhalten des Stromabnehmers, des Fahrdrahtes und des diesen haltenden Kettenwerkes definierte Kontaktkräfte zwischen Fahrdraht und Schleifstück nicht überschritten werden, um ein Optimum bei der Stromversorgung und dem Verschleiß an der Kontaktstelle zwischen Fahrdraht und Schleifleiste zu gewährleisten.

Diese Abstimmung erfolgt entweder passiv über entsprechende Windleitbleche oder aktiv durch geschwindigkeitsabhängige Steuerung bzw. durch Messung und Regelung der Kontaktkräfte. In jedem Fall wird zumindest während der Abstimmung der Stromabnehmer Information über die Anpresskraft möglichst nah an besagter Kontaktstelle benötigt. Für Infrastrukturbetreiber, die für die Oberleitung verantwortlich sind, ist es dagegen von großem Interesse, die Interaktion zwischen der Oberleitung und den entsprechenden Schienenfahrzeugen erfassen zu können, um den Nachweis der Übereinstimmung mit den geltenden Regelwerken zu führen und gegebenenfalls bei Kontaktkraftüberschreitungen oder Kontaktkraftverlusten das Kettenwerk der Oberleitung nachregulieren zu können.

Zur Beurteilung des Zusammenwirkens Stromabnehmer / Oberleitung kann gemäß EN 50317 ein Kraftmessverfahren eingesetzt werden.

Dieses Messverfahren muss die am Berührungspunkt Schleifstück-Fahrdraht wirkenden Kräfte anzeigen.

Von den eingesetzten Messsystemen ist jedoch keines in der Lage, den Kontaktpunkt direkt zu messen. Die Sensoren befinden sich unterhalb der Schleifstücke, so dass der aerodynamische Einfluss der Schleifstücke das Messergebnis verfälscht. Zur Korrektur dieses systematischen Fehlers sind aerodynamische Korrekturwerte zu ermitteln.

In den bisher vorhandenen Normen und Richtlinien (EN 50317, UIC Mb608) ist jeweils nur von einer aerodynamischen Anpresskraft die Rede, die ermittelt werden muss, wenn die Wippe den Fahrdraht nicht berührt. Ihr Wert ist gleich der Summe der statischen Kontaktkraft unter Einfluss des Fahrtwindes bei der betreffenden Geschwindigkeit. Eine genaue Beschreibung dieser aerodynamischen Messung ist nicht vorhanden.

Wenn sich die Schleifstücke im Kontakt mit dem Fahrdraht befinden, werden in den Kraftsensoren $F_{z1}$, $F_{z2}$, $F_{z3}$, und $F_{z4}$ der herkömmlichen Kontaktkraftmesssysteme die auf das Schleifstück wirkenden aerodynamischen Kräfte nicht gemessen. Der aerodynamische Wert der Kontaktkraft beeinflusst also, abhängig von Größe und Vorzeichen, das Messergebnis.

Zur Ermittlung der auf den Kontaktpunkt wirkenden Kraft wird bisher eine sogenannte Seilmessung eingesetzt. Hierbei werden die Schleifstücke ca. 10 cm unterhalb des Fahrdrahtes fixiert. Die Kraft im Seil wird mit entsprechenden Sensoren gemessen.

Die aus der Summe $F_{z1} + F_{z2} + F_{z3} + F_{z4}$ gebildete Summe $F_z$ ist der vom Messsystem ausgegebene Wert.

Die aus den beiden Sensoren $F_{Seil\,I}$ und $F_{Seil\,II}$ gebildete Summe $F_{Seil}$ ist die Kontaktkraft, die im Berührungspunkt Fahrdraht-Schleifstücke wirkt.

Die aerodynamische Korrektur für die einzelnen Schleifstücke wird gebildet aus:

$$F_{Seil\,I} - F_{sI} = \text{aerodynamische Korrektur Schleifstück I}$$

$$F_{Seil\,II} - F_{sII} = \text{aerodynamische Korrektur Schleifstück II}$$

Der Korrekturwert für den Gesamtwert der Kontaktkraft ermittelt sich somit zu:

$$F_{korr\_gesamt} = (F_{Seil\,I} - F_{sI}) + (F_{Seil\,II} - F_{sII})$$

Bei der Ermittlung der Korrekturwerte wird der Stromabnehmer nicht vom Fahrdraht geführt. Unter Windeinfluss kommt es zu einer elastischen Verformung, vor allem des Oberarms. Die Wippenführungsstange soll die horizontale Lage der im statischen Zustand eingerichteten Wippe gewährleisten.

Die tatsächliche Höhe der beiden Schleifstücke ist unter Windlast in Folge der elastischen Verformung jedoch unterschiedlich. Dies hat unmittelbar Einfluss auf die Aerodynamik. Ein geringes Kippen der Wippe führt somit zu aerodynamischen Fehlern.

Bei elastischen Stromabnehmern ist es auch wahrscheinlich nicht möglich, die Schleifstücke über den gesamten Geschwindigkeitsbereich waagerecht zu fixieren.

Die den Stromabnehmer führenden Seile dürfen sich unter Last nicht sehr stark recken, müssen aber möglichst dünn sein, um dem Wind eine geringe Angriffsfläche zu bieten. Auch eine Auslenkung der Seile in x-Richtung führt zu Messfehlern.

Diese Korrekturmessung ist jeweils nur bei einer bestimmten Höhe möglich, da der Stromabnehmer keinen Kontakt zur Oberleitung haben darf. Kurze Abschnitte mit größeren Fahrdrahthöhen sind jeweils nur durch Änderung der Arbeitshöhe zu realisieren.

Bekannt ist eine Kraftmesseinrichtung zur Bestimmung einer Kontaktkraft zwischen einem Stromabnehmerendhorn eines Schienenfahrzeuges und einem Fahrdraht einer Oberleitung, wobei Faser-Bragg-Sensoren (FBS) verwendet werden (DE 10 2005 024 202 A1, DE 10 2498996 B4, DE 197 25 906 C1).

Diese Verfahren messen nur die sogenannte Schnittkraft. Dies ist die Kontaktkraft unter Vernachlässigung der aerodynamischen Einflüsse auf das Schleifstück.

Die Verfahren haben mehrere Nachteile:

a) Da der Stromabnehmer bei unterschiedlichen Fahrdrahthöhen (wegen der unterschiedlichen aerodynamischen Strömungsverhaltnisse in Abhängigkeit der Höhe über dem Fahrzeugdach) ein anderes aerodynamisches Verhalten zeigt, müssen für unterschiedliche Fahrdrahthöhen unterschiedliche Korrekturwerte ermittelt werden.

b) Für unterschiedliche Befahrgeschwindigkeiten und damit anderer Strömungsgeschwindigkeit müssen ebenfalls unterschiedliche aerodynamische Korrekturen ermittelt werden.

c) Es kann mit den Seilen nie 100%ig sichergestellt werden, dass die Wippe die gleiche horizontale Lage einnimmt, die sie bei Anliegen am Fahrdraht hat. Dadurch treten bei der Schnurmessung andere Kraftkomponenten in vertikaler Richtung auf, die das Ergebnis verfälschen (können).

d) Bei der Schnurmessung wirkt die durch Schnüre ausgeübte Kraft immer auf die Schleifstückmitte. In der Realität bei anliegender Wippe wandert der Kontaktpunkt mit dem Zickzack der Oberleitung über fast die volle Breite des Schleifstücks. Da die Schleifstücke an beiden Seiten unabhängig einfedern können, nehmen sie daher quer zur Fahrtrichtung des Fahrzeugs eine andere, asymmetrische Höhenlage ein. Auch dadurch treten bei der eigentlichen Messung andere aerodynamische Kraftkomponenten in vertikaler Richtung als bei der Schnurmessung auf, die durch das Schnurmessverfahren nicht kompensiert werden können.

Aus der DE 10 2005 020125 B3 ist eine Einrichtung zur Bestimmung einer von einem Stromabnehmer eines Schienenfahrzeuges auf einen Fahrdraht einer Oberleitung wirkenden Kontaktkraft bekannt. Dieses Verfahren arbeitet stationär an einer bestimmten Stelle der Oberleitung. Es ist nicht geeignet, kontinuierlich über längere Strecken die Kontaktkraft zu messen, wie das für Messungen an Oberleitungen und zur Zulassung von Stromabnehmern z.B. nach TSI gefordert wird.

Der Erfindung liegt die Aufgabe zugrunde, die Kontaktkraft des Stromabnehmers zur Oberleitung über den gesamten Arbeitsbereich korrekt zu messen.

Dies wird erfindungsgemäß durch den Inhalt des Patentanspruches 1 erreicht, wobei die aerodynamischen Kräfte durch eine direkte Ermittlung der Kontaktkräfte zwischen Stromabnehmer und Oberleitung erfasst werden. Je nach Messaufwand wird dieses Messverfahren

1. generell bei allen Messungen angewandt.

2. oder es werden die Kräfte zu Korrekturzwecken bei einigen wenigen Messfahrten erfasst und die Messwerte der Messfahrten mit herkömmlichen Messsystemen mit diesen Werten korrigiert.

Dabei können die Korrekturwerte entweder nur geschwindigkeits- und höhenabhängig oder zusätzlich in Abhängigkeit von der Position des Fahrzeuges auf der Strecke ermittelt werden, so dass geschwindigkeitsabhängige und ortsbezogene Messwerte zur Korrektur von Einflüssen aus dem Streckenprofil und vorhandenen Bauwerken verwendet werden. Bei Mehrfachtraktion ist es möglich, die Kontaktkraft je nach Stromabnehmerkonfiguration im Zugverband zu ermitteln.

Beim erfindungsgemäßen Verfahren werden die Kraftsensoren so angebracht, dass die Sensoren und die darüber befindliche Kontaktfläche sich in einem modifizierten Schleifstück (=Messschleifstück) befinden. Wesentliche Forderung an dieses Messschleifstück ist dabei, dass die äußeren Abmessungen (insbesondere die aerodynamisch besonders wichtigen Seitenteile) den äußeren Abmessungen der üblichen Schleifstücke entsprechen, d.h. dass sich die Messschleifstücke aerodynamisch wie die üblichen Schleifstücke verhalten. (Zusätzlich sollte das Gewicht der Messschleifstücke im Wesentlichen dem der üblichen Schleifstücke entsprechen.) Denkbar sind dabei Ausführungen, bei denen nur die Kohle durch ein U-Profil gleicher oder ähnlicher Höhe ganz oder teilweise ersetzt wird, während das Trägerprofil erhalten bleibt. Denkbar sind aber auch Ausführungen in denen Kohle und Trägerprofil ganz oder teilweise durch Konstruktionen mit vergleichbaren äußeren Abmessungen ersetzt werden.

Im Inneren dieser Messschleifstücke werden dann die benötigten Kraftsensoren und eine Kontaktfläche zum Fahrdraht oberhalb der Kraftsensoren untergebracht. Mit der Kontaktfläche wird sichergestellt, dass die Krafteinleitung aus dem Fahrdraht in die Sensoren möglichst nur über die Kontaktfläche erfolgt. dazu ist diese Fläche hinreichend stabil auszuführen. Ferner ist sie von Ihren Abmessungen möglichst so auszuführen, dass abgesehen von einzelnen Sonderfällen wie z.B. einlaufenden Fahrdrähten in Weichenbereichen, der Fahrdraht nur auf der Kontaktfläche aufliegt und auch kein Kraftnebenschluss zum restlichen Messschleifstück erfolgt. Da die Messsensoren und die Kontaktfläche des Messschleifstücks sich im Wesentlichen innerhalb des Messschleifstücks befinden und damit keine wesentlichen aerodynamischen Kräfte auf das Messsystem wirken, werden mit diesem System die Kontaktkräfte direkt gemessen. Durch die zusätzliche Messung der Schnittkräfte mit einem herkömmlichen System erhält man aus der Differenz der entsprechenden Messwerte dann die aerodynamischen Kräfte. Zusätzlich können sowohl am Schleifstück wie an der Kontaktfläche Beschleunigungssensoren zur Korrektur des dynamischen Einflusses angebracht werden.

Die Kontaktfläche muss bei Verwendung des Stromabnehmers zur Stromübertragung so ausgeführt werden, dass die benötigten Ströme übertragen werden können.

Dazu sind Ausführungen dieser Fläche aus statisch ausreichend bemessenem Edelstahl denkbar.

Es ist aber auch denkbar, die Kontaktfläche ähnlich wie herkömmliche Schleifstücke mit Kohle oder imprägnierter Kohle ggf. auch mit einer Zwischenschicht aus gut leitendem Material ganz oder teilweise zu beschichten, um die Übertragungseigenschaften zu verbessern. Dann könnte für das Trägermaterial der Kontaktfläche statt Edelstahl anderes Material, z.B. Aluminiumlegierung verwendet werden.

Denkbar ist ferner ein Aufbau der Kontaktfläche aus verschiedenen Materialien mit oder ohne Kohlebeschichtung als direktes Kontaktmaterial zum Fahrdraht.

Die zusätzlichen Messungen zur Bestimmung der aerodynamischen Korrektur (Seilmessung) entfallen damit. Durch die erfindungsgemäße Lösung werden Messunsicherheiten, die durch die bisherige Seilführung entstehen, vermieden, weil die Stromabnehmerwippe wie im Normalbetrieb vom Fahrdraht geführt wird.

### Ausführungsbeispiel

Die Erfindung soll nachstehend anhand eines Ausführungsbeispieles näher erläutert werden. Dabei zeigt:

- Figur 1 - das Schleifstück im Querschnitt mit Sensoren im Bereich d er Schleifkohle
- Figur 2 - das Schleifstück in der Ansicht
- Figur 3 - das Schleifstück im Querschnitt mit Sensoren im Bereich von Kohle und Träger

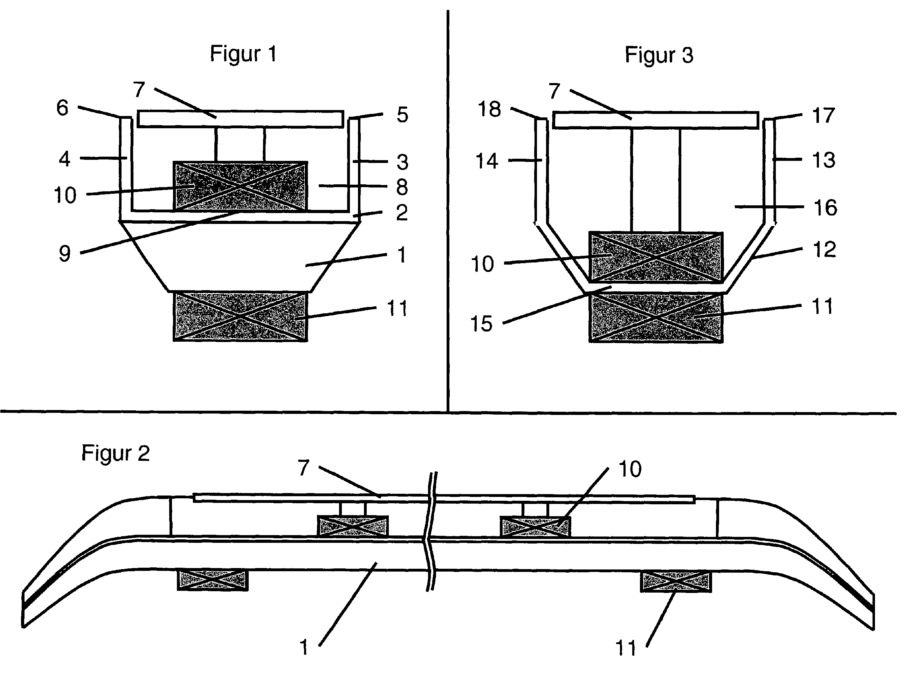

Der an der nicht dargestellten Wippe befestigte Schleifleistenträger 1 weist nach Figur 1 und 2 (alternativ kann analog Figur 3 nicht nur der Bereich der Schleifkohle, sondern auch ein größerer Querschnitt genutzt werden) einen als Hohlkörper aufgebauten Grundkörper auf, der an seiner dem Fahrdraht zugewandten Seite mit einem U-förmigen Hohlprofil 2 gekoppelt ist. Die beiden ebenfalls in Richtung Fahrdraht gerichteten Schenkel 3; 4 des Hohlprofils 2 weisen zwischen ihren Enden 5; 6 den Schleifkontakt 7 auf. In dem dadurch umschlossenen Raum 8 ist am Boden 9 des U-förmigen Hohlprofils 2 der innere Sensor 10 befestigt. Unterhalb des Schleifleisteträgers 1 können weitere äußere Sensoren 11 befestigt werden. Diese sollten vorzugsweise direkt vertikal fluchtend unter dem inneren Sensor 10 angeordnet werden. Dadurch werden Fehler, wie z. B. bei Durchbiegung des Schleifstückes für die Messung der z-Kraft (vertikale Kraftrichtung) vermieden.

In einer vorteilhaften Ausbildung der erfindungsgemäßen Lösung entfällt nach Figur 3 die bisherige Ausbildung des Grundträgers 1. Der innere Sensor 10 wird dabei direkt auf dem Boden 15 des U-förmigen Hohlprofils 12 befestigt, welches unmittelbar auf dem äußeren Sensor 11 aufsitzt. Die Schenkel 13 und 14 des durchgehenden U-förmigen Hohlprofils 12 weisen die Enden 17 und 18 auf, die den Schleifkonktakt 7 umschließen. Auch bei dieser Ausführung bleibt jedoch die äußere Kontur des Grundkörpers und der Kohle erhalten.

Mit diesem Messschleifstück sind dann zwei Arten von Messverfahren durchführbar:

A.) Die Schnurmessung wird durch eine Messung mit dem sehr viel exakteren Messschleifstück ersetzt. Durch Ausrüstung des Stromabnehmers mit Kraftsensoren für die Schnittkraftmessung (ggf. zusätzlich mit Beschleunigungssensor(en) am Schleifstück) und zusätzlich mit dem neuen Messsystem im Messschleifstück (und ggf. zusätzlich mit Beschleunigungssensor(en) an der Kontaktfläche) können im einfachsten Fall die gleichen aerodynamischen Korrekturwerte, wie mit der Schnurmessung (Stand der Technik) erfasst werden. Zusätzlich ist es aber möglich, die Korrekturwerte in Abhängigkeit von der Position des Fahrzeugs auf der Strecke zu ermitteln, so dass nicht nur (geschwindigkeitsabhängige) Durchschnittswerte sondern (geschwindigkeitsabhängige und) ortsbezogene Messwerte zur Korrektur verwendet werden können. Dies erlaubt dann die Korrektur von oben genannten Einflüssen aus dem Streckenprofil und eventuell vorhandenen Bauwerken. Weiterer Vorteil dieses Verfahrens ist, dass für die nachfolgenden Schnittkraftmessungen wieder die kostengünstigen Standardschleifstücke eingesetzt werden können.

B.) Dieses Verfahren verwendet die neuen Messschleifstücke direkt zur Messung der Kontaktkraft. Die zusätzliche Messung mit dem herkömmlichen Schnittkraftmesssystem wird dann bei Bedarf nur noch zur Bestimmung der Kräfte parallel zur Fahrtrichtung benötigt und kann ggf. ganz entfallen.

## Liste der verwendeten Bezugzeichen

1 - Schleifleistenträger (Grundkörper)

2 - U-förmiges Hohlprofil

3 - U-Schenkel

4 - U-Schenkel

5 - Ende U-Schenkel

6 - Ende U-Schenkel

7 - Schleifkontakt

8 - umschlossener Raum

9 - Boden

10 - innerer Sensor

11 - äußerer Sensor

12 - Hohlprofil

13 - Schenkel

14 - Schenkel

15 - Boden

16 - umschlossener Raum

17 - Ende

18 - Ende

## Patentansprüche

1. Verfahren zur Messung von Kontaktkräften zwischen einem Stromabnehmer und einer Oberleitung unter Einschluss der aerodynamischen Kraftanteile,
*gekennzeichnet dadurch, dass*
die aerodynamischen Kräfte durch eine direkte Ermittlung der Kontaktkräfte zwischen der Kontaktfläche des Stromabnehmers und der Oberleitung durch Messtechnik im Schleifstück erfasst werden.

**2.** Verfahren nach Anspruch 1, *gekennzeichnet dadurch, dass* die Messtechnik im Schleifstück nur zur Ermittlung von aerodynamischen Korrekturwerten für Kontaktkraftmessungen mit Messsystemen zwischen Schleifstückträger und Wippe verwendet wird.

**3.** Verfahren nach Anspruch 2, *gekennzeichnet dadurch, dass* zusätzlich in Abhängigkeit von der Position des Stromabnehmers im Zugverband und auf der Strecke aerodynamische Korrekturwerte bzw. Kennfelder ermittelt werden, die als geschwindigkeitsabhängige und ortsbezogene Messwerte (Fahrdrahthöhe) zur Korrektur von Einflüssen aus dem Streckenprofil und vorhandenen Bauwerken verwendet werden.

**4.** Vorrichtung zur Messung von aerodynamischen Kraftanteilen bei der Kontaktkraftmessung zwischen einem Stromabnehmer und einer Oberleitung, wobei der Stromabnehmer mindestens eine Wippe aufweist, die mit mindestens einem Schleifleistenträger verbunden ist, der in Form eines als Hohlkörper ausgeführten Grundkörpers aufgebaut und mit einem Schleifstück gekoppelt ist, *gekennzeichnet dadurch, dass* das Schleifstück vollständig oder teilweise an Stelle der Schleifleiste (Schleifkohle) als U-förmiges Hohlprofil (2) ausgebildet ist, welches mit seinem Boden (9) auf dem Grundkörper (1) (Schleifleistenträger) befestigt und zwischen den beiden Schenkeln (3; 4) des Hohlprofils (2) einen Schleifkontakt (7) aufweist, wobei auf dem Boden des Hohlprofils (2) ein innerer Sensor (10) befestigt ist, der sich am Schleifkontakt (7) abstützt.

**5.** Vorrichtung nach Anspruch 4 *gekennzeichnet dadurch, dass* das Hohlprofil (12) mit seinem Boden (15) auf der Schleifstückhalterung bzw. einem externen Sensor (11) befestigt ist und zwischen den beiden Schenkeln (13; 14) des Hohlprofils (12) einen Schleifkontakt (7) aufweist, wobei auf dem Boden des Hohlprofils (12) ein innerer Sensor (10) befestigt ist, der sich am Schleifkontakt (7) abstützt.

**6.** Vorrichtung nach Anspruch 4 oder 5, *gekennzeichnet dadurch, dass* das Schleifstück eine zur jeweiligen Stromabnehmerbauart äußere aerodynamische Form aufweist, die dem Regelschleifstück entspricht.

**7.** Vorrichtung nach Anspruch 4, 5 oder 6, *gekennzeichnet dadurch, dass* der innere (10) und der äußere Sensor (11) direkt übereinander fluchtend am Schleifleistenträger (1) angeordnet sind.

**8.** Vorrichtung nach Anspruch 4, 5 oder 6, *gekennzeichnet dadurch, dass* beide Sensoren (10; 11) mit einer Auswerteeinheit verbunden sind.

**9.** Vorrichtung nach Anspruch 4, *gekennzeichnet dadurch, dass* der Schleifkontakt (7) aus Edelstahl oder aus Aluminium oder aus verschiedenen Metallen oder aus einem Träger mit leitender Beschichtung besteht.

**10.** Vorrichtung nach Anspruch 4 und 9, *gekennzeichnet dadurch, dass* der Schleifkontakt (7) eine vollständige oder teilweise Beschichtung aus gut leitendem Material, vorzugsweise Kohle oder imprägnierter Kohle, aufweist.

**11.** Vorrichtung nach Anspruch 4 bis 10, *gekennzeichnet dadurch, dass* das U-förmige Hohlprofil (2; 12) mit dem Schleifkontakt (7) einen umschlossenen Raum (8; 16) bildet.

Figur 1

Figur 3

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005024202 A1
- DE 102498996 B4
- DE 19725906 C1
- DE 102005020125 B3